Europäisches Patentamt

**European Patent Office**

**Office européen des brevets**

(11) Numéro de publication: **0 143 742**
A1

# (12) DEMANDE DE BREVET EUROPEEN

(21) Numéro de dépôt: **84810472.5**

(22) Date de dépôt: **01.10.84**

(51) Int. Cl.⁴: **B 60 N 1/00,** A 47 C 7/02, A 47 C 31/12

---

(30) Priorité: **03.10.83 CH 5366/83**

(43) Date de publication de la demande: **05.06.85 Bulletin 85/23**

(84) Etats contractants désignés: **AT BE CH DE FR GB IT LI NL SE**

(71) Demandeur: **YOUNGFLEX S.A., 1 rue Fries, CH-1701 Fribourg (CH)**

(72) Inventeur: **Asper, Jean-Jacques, Evordes Chemin des Bornauds, F-1257 Croix de Rozon (CH)**

(74) Mandataire: **Dousse, Blasco et al, 7, route de Drize, CH-1227 Carouge/Genève (CH)**

---

(54) **Siège, notamment pour voiture automobile.**

(57) Ce siège comprend un châssis (1) en forme de cuvette dans lequel une garniture de mousse de polyuréthanne moulée (2) est ajustée. Un dégagement (3), ménagé entre deux renforcements latéraux (2a) de cette garniture (2), reçoit un corps de chauffe (4) constitué par une feuille découpée d'aluminium collée entre deux feuilles de Mylar sur lequel est posée une feuille de mousse de polyéthylène (5) thermoformable recouverte d'une couche de mousse (6) de polyuréthanne. Le tout est maintenu ensemble par un tissu d'habillement (8) fixé au châssis.

## SIEGE, NOTAMMENT POUR VOITURE AUTOMOBILE

La présente invention se rapporte à un siège, notamment pour voiture automobile, comprenant un châssis supportant des éléments élastiquement déformables servant au rembourrage.

Les éléments élastiquement déformables sont généralement formés soit de ressorts soit d'un matériau élastiquement compressible telle qu'une mousse de polymère et se déforment sous l'effet du poids puis reprennent leur position initiale. Avec une telle solution, la pression à laquelle les différentes parties du corps sont soumises varie en fonction de la déformation des éléments élastiques. De ce fait, il se trouve que certaines parties du corps sont plus comprimées, notamment les parties charnues situées sous l'os iliaque. Il s'ensuit une mauvaise irrigation de ces parties par le sang, de sorte qu'après un certain temps, on perçoit une sensation d'inconfort et l'on ressent la nécessité de changer de position. Les pressions résultant de l'appui du dos, en particulier de la région lombaire, sont également mal réparties créant à la longue une sensation d'inconfort. Ces phénomènes se manifestent plus particulièrement lors de longs trajets en automobile, en particulier chez le conducteur d'un véhicule, augmentant la fatigue et diminuant les aptitudes normales du conducteur, rendant la conduite plus dangereuse.

Ce phénomène est bien connu, on y remédie en recommandant aux conducteurs de s'arrêter périodiquement lors d'un long déplacement. Diverses solutions assez élaborées ont été adoptées pour augmenter le confort des sièges destinés aux chauffeurs routiers. Ces solutions sont généralement trop complexes et coûteuses pour être transposées sur des voitures particulières, du fait qu'elles utilisent notamment des compartiments déformables dont la pression est réglable par une source d'air comprimé. Or il est impensable d'envisager de munir une voiture de tourisme d'un compresseur.

- 2 -

0143742

Les solutions généralement utilisées ont recours à des éléments élastiques, notamment à des coussins de mousse de polymère élastiquement compressibles préalablement moulés en vue de réduire au maximum les inconvénients susmentionnés. Il s'avère cependant que ces solutions ne peuvent qu'atténuer légèrement les effets du phénomène susmentionné, mais que celui-ci se manifeste malgré tout de façon plus ou moins sensible suivant les personnes. C'est d'ailleurs là l'un des problèmes de tels sièges qui présentent des formes semblables alors qu'ils sont destinés à l'ensemble d'une population qui se compose d'individus de tailles, de poids et de conformations divers. Il est évident que toutes les solutions selon lesquelles un même siège est étudié pour s'adapter à n'importe quel individu sont incapables de remédier aux inconvénients susmentionnés. Elles ne peuvent que réunir des propriétés destinées à satisfaire moyennement tout le monde.

On a déjà proposé divers autres solutions en vue d'adapter la forme d'un siège à un utilisateur déterminé. C'est ainsi que l'on connait des sièges formés d'une enveloppe souple renfermant une multitude de petites billes libres qui se déplacent en fonction des variations de pression qui s'exercent sur elles lorsque l'enveloppe est déformée par la charge qu'elle supporte. Le brevet US-A-4,114,214 propose un perfectionnement de cette idée, qui consiste à augmenter la pression à l'intérieur de l'enveloppe pour faciliter le déplacement des billes selon un principe rappelant celui du lit fluidisé. Cette solution présente l'inconvénient de nécessiter une source d'air sous pression. De plus, dans un véhicule, les secousses provoqueraient un déplacement constant des billes de sorte que cette solution n'est pas utilisable pour les sièges de voitures automobiles.

On a également proposé de thermoformer une plaque d'un matériau relativement rigide à la température ambiante en vue de fabriquer des meubles, notamment des sièges, conformés en fonction d'une personne déterminée. Ce procédé n'est pas prévu pour la réalisation de sièges rembourrés à suspension élastique tels que le sont les sièges de voitures automobiles.

On a enfin proposé l'utilisation de gels contenus dans des enveloppes souples étanches en vue de former des surfaces destinées à s'adapter à n'importe quelle forme de manière à obtenir une répartition de pression uniforme. Une telle solution est cependant plus particulièrement destinée au domaine médical, pour des patients susceptibles de subir une immobilisation prolongée. Elle ne se prête pas à d'autres utilisations et notamment à la réalisation de sièges de voitures automobiles.

Le but de la présente invention est d'apporter une solution mieux adaptée à chaque individu, permettant d'être mise en oeuvre simplement et susceptible en particulier d'être utilisée pour les sièges de voitures de tourisme.

On a déjà proposé d'utiliser, dans la demande EP 0 004 829 une mousse de polymère thermo-formable pour adapter une coque non extensible, notamment une chaussure de ski à un pied, en mettant la mousse sous précontrainte et en chauffant ensuite la mousse à sa température de ramollissement pour lui permettre de fluer et de conserver sa forme après refroidissement sous charge.

Dans le cas d'une chaussure de ski, il s'agit de rendre la chaussure aussi étroitement solidaire du pied que possible de manière à permettre de transmettre avec précision et rapidité la commande du corps aux skis, ce qui peut être obtenu si le logement ménagé pour le pied correspond avec précision à la forme du pied d'où l'idée du moulage.

Dans le cas d'un siège de voiture, le problème est plus complexe dans la mesure où ce siège doit conserver une certaine élasticité en fonction de la suspension du véhicule. Un simple moulage du siège à l'instar du chausson thermo-formable utilisé dans le cas de la chaussure de ski ne permet pas de satisfaire aux exigences de confort recherché.

A cet effet, la présente invention a pour objet un siège selon la revendication 1.

Grâce à sa structure en sandwich, les éléments élastiquement déformables sont soumis, après thermo-formage de la couche intermédiaire, à une précontrainte qui est fonction de la déformation permanente de la couche intermédiaire consécutive à son chauffage à sa température de ramollissement, suivi de son refroidissement à l'état déformé, destiné à conserver à cette couche, de façon permanente, l'empreinte de la déformation.

Le dessin annexé illustre, schématiquement et à titre d'exemple, deux variantes du siège objet de la présente invention.

La figure 1 est une vue en élévation de profil coupée de la première variante.

La figure 2 est une vue en perspective avec coupe de la seconde variante.

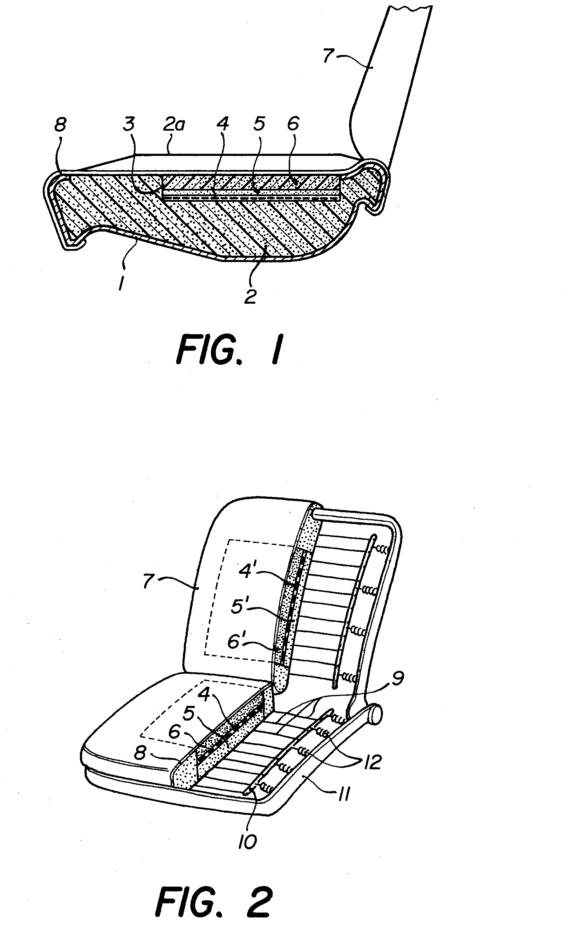

Le siège illustré par la fig. 1 est un siège de voiture automobile comportant un châssis 1 en forme de cuvette dans lequel une garniture de mousse moulée 2 est ajustée. Un dégagement 3 de forme carrée ou rectangulaire est ménagé entre deux renforcements latéraux 2a de la garniture de mousse moulée 2. Le bord arrière de ce dégagement 3 est sensiblement adjacent au dossier 7 du siège. La garniture de mousse moulée 2 est réalisée en un matériau non thermo-plastique tel que de la mousse de polyuréthane. Elle est destinée à constituer le support élastique du siège, le châssis 1 étant relié de façon rigide au plancher. Le dégagement 3 ménagé dans la face supérieure de cette garniture reçoit un corps de chauffe 4 constitué par une feuille d'aluminium de 50 $\mu$m d'épaisseur découpée pour former un conducteur électrique résistif formé de branches écartées parallèles dont les extrémités opposées de chaque branche sont reliées respectivement aux extrémités des deux branches adjacentes afin de former un cheminement en méandre pour le courant électrique. Cette feuille d'aluminium ainsi découpée est collée entre deux feuilles de Mylar (marque déposée) de 50 $\mu$m chacune. De ce fait, la feuille d'aluminium collée entre ces feuilles de Mylar est renforcée mécaniquement et les branches parallèles formant un conducteur résistif en méandre ne peuvent pas venir en contact entre elles pour créer des courts-circuits.

Une feuille de mousse 5 en matériau thermo-formable tel que le polyéthylène est posée sur le corps de chauffe 4, puis elle est elle-même recouverte d'une couche de mousse 6 en matériau non thermo-formable de préférence faite de la même matière et avec la même densité que la mousse de la garniture 2. La garniture de mousse 2 est recouverte d'un tissu d'habillement 8 fixé au châssis qui maintient les éléments susmentionnés dans le dégagement 3.

Le corps de chauffe 4 est relié à une source de courant continu, dans le cas d'un siège d'automobile, cette source de courant peut être constituée par la batterie du véhicule.

Selon un exemple de réalisation, la dimension du dégagement 3 dans le sens de la longueur du siège (dimension parallèle à la coupe du dessin) est de 250 mm, alors que dans le sens de la largeur du siège ce dégagement a 300 mm. La profondeur du dégagement est de 25 mm, la feuille de mousse thermo-formable 5 a une épaisseur de 9 mm et est en polyéthylène de 50 kg/m$^3$. La mousse de la garniture 2 et celle de la couche 6 sont toutes deux en polyuréthane de 40 kg/m$^3$.

Pour réaliser le thermo-formage de la feuille 5, on s'est assis sur le siège et on a alimenté le corps de chauffe 4 avec une puissance de 240 W. On a mesuré avec des thermocouples la température de la face de la feuille de mousse thermo-formable 5 en contact avec le corps de chauffe 4 et on a arrêté l'alimentation lorsque la température de cette face a atteint 130°C au bout de 2 min, ce qui correspond à une température maximum de la face opposée de cette feuille de 67°C. La personne est restée assise sur le siège jusqu'à ce que la température de la face de la feuille thermo-formable 5 en contact avec le corps de chauffe 4 soit redescendue à 60°C, c'est-à-dire au bout de 12 min après le début du chauffage, température à partir de laquelle la feuille thermo-formable 5 conserve la déformation qu'elle a subie pendant le chauffage.

Etant donné que la garniture de mousse moulée 2, la feuille thermo-formable 5 et la couche de mousse non thermo-formable 6 sont maintenues étroitement par le tissu d'habillement 8, et compte tenu d'une certaine rigidité de la feuille de polyéthylène moulée 5, qui est supérieure à celle de la mousse de la garniture 2 et de la couche 6, la déformation est transmise en partie à l'élément élastique de suspension que constitue la garniture de mousse moulée 2. La prédéformation du siège sert à mieux répartir les contraintes. De ce fait, l'arrêt de la circulation sanguine dans les vaisseaux irrigant les parties charnues situées sous l'os iliaque est évité, ce qui réduit la sensation d'inconfort et de fatigue. L'intérêt de la solution proposée réside dans la combinaison d'une certaine fermeté conférée par la couche thermoformée 5 atténuée par la couche de mousse non thermo-formable 6, le tout étant monté sur une suspension élastique constituée par la garniture de mousse moulée 2 et précontrainte par la feuille de mousse de polyéthylène thermoformée, compte tenu de la plus grande rigidité de cette dernière, notamment une fois qu'elle

- 6 -

0143742

est thermoformée.

Bien entendu, il est également possible de munir le dossier d'un siège, notamment dans la partie destinée à supporter la région lombaire, d'une garniture thermo-formable identique à celle décrite ci-dessus.

La variante illustrée par la fig. 2 diffère de celle illustrée par la fig. 1 essentiellement par le remplacement de la garniture de mousse moulée 2 constituant l'élément de suspension élastique par une suspension formée de fils d'acier parallèles 9 dont les extrémités respectives sont fixées à deux barres parallèles 10 reliées au châssis 11 du siège par des ressorts à boudin 12.

Contrairement à la variante précédente, le corps de chauffe 4 de la feuille de mousse thermo-formable 5 n'est pas disposé entre l'élément élastique de suspension et cette feuille 5 mais entre cette feuille 5 et la couche de mousse non thermo-formable 6, de manière à ce que le corps de chauffe 4 se trouve entre deux couches isolantes. En outre, si l'on chauffait la face de la feuille de mousse thermo-formable 5 en contact avec les fils de suspension 9, ceux-ci pénétreraient dans cette feuille de mousse lors du thermo-formage et le corps de chauffe 4 serait endommagé.

Sur cette variante, on a représenté une zone thermoformable disposée sur le dossier du siège et comprenant, comme pour la partie horizontale, une couche de mousse thermoformable 5', un corps de chauffe 4' et une couche de mousse non thermoformable 6'.

Des essais ont été réalisés à l'aide de différentes variantes. Selon l'une de celles-ci, la feuille thermoformable 5 de la fig. 2 est formée de deux couches entre lesquelles le corps de chauffe 4, identique à celui décrit en détail pour la variante précédente est disposé. La mousse de polyéthylène, utilisée pour ces couches, est de densité égale mais de préférence supérieure à 50 kg/m$^3$. Chacune de ces couches a 7 mm d'épaisseur et elles sont recouvertes d'une couche de mousse 6 non thermo-formable en polyuréthane d'environ 40 kg/m$^3$ et de l'ordre de 15 mm d'épaisseur. D'autres essais ont été réalisés successivement avec des feuilles 5 de polyéthylène de 9 mm, respectivement 16 mm d'épaisseur d'une densité variant de 50 à 80 kg/m$^3$ avec le corps de chauffe disposé entre cette feuille thermo-formable 5 et la couche de mousse non thermo-formable 6, comme illustrée par l'exemple de la figure 2.

Différentes températures de chauffage ont été appliquées à la mousse entre 109°C et 144°C ce qui correspond à des températures respectives de 59°C à 64°C dans la masse de mousse. On obtient pratiquement la même déformation de la feuille 5.

Ces essais ont révélé une nette amélioration du confort par rapport au même siège sans thermo-formage et avec une seule couche de mousse de polyuréthane de l'ordre de 40 kg/m$^3$ posée sur la suspension élastique avec fils métalliques tendus sur la bâti du siège.

Des essais de thermo-formage appliqués au dossier avec la même disposition des éléments que dans la variante de la fig. 2 ont également été réalisés. Pour effectuer ces essais, on a utilisé une feuille de mousse de polyéthylène de 15 mm d'épaisseur et d'une densité supérieure à 50 kg/m$^3$ posée directement sur la suspension à ressorts du même type que celle de la fig. 2. Ensuite, on a placé un corps de chauffe identique à celui décrit en relation avec la fig. 1 puis on a placé une couche d'environ 15 mm de mousse non thermo-formable de polyuréthane de 40 kg/m$^3$.

Le thermo-formage s'est déroulé dans les mêmes conditions de température que pour la partie siège. On constate que le dossier ainsi thermo-formé confère un bon maintien dorsal en alliant une certaine fermeté associée au confort de la couche non thermo-formable. Il est à relever au sujet de cette couche de polyuréthane que l'on retrouve en permanence en couverture de la feuille thermo-formable qu'elle sert, d'une part, à atténuer la raideur de la feuille de polyéthylène choisie d'une densité assez élevée et devenant assez raide après le thermo-formage et, d'autre part, à isoler thermiquement l'utilisateur pendant l'opération de thermo-formage. Dans tous les cas, la chaleur pendant l'opération de thermo-formage s'est révélée tout à fait supportable. Il faut encore mentionner que la mousse de polyuréthane de densité de l'ordre de 40 kg/m$^3$ est une mousse à pores ouverts permettant une aération de la surface en contact avec le corps et qu'elle est d'une qualité correspondant à celle utilisée pour le rembourrage des sièges de voitures automobiles.

Les alimentations électriques utilisées ont été constamment limitées à 12 V et 20 A, soit une puissance maximum de 240 W et en moyenne de 200 W compte tenu de l'augmentation de la résistivité du corps

- 8 -

0143742

de chauffe avec la température. Ces conditions correspondent à celles qui peuvent être obtenues avec une batterie de voiture automobile de manière à rendre le thermo-formage autonome dans le cas du thermo-formage d'un siège de voiture automobile. Un tel thermo-formage n'est prévu en pratique que pour le siège du conducteur, étant donné que c'est le siège occupé le plus fréquemment par la même personne et que c'est le conducteur qui est le moins libre de sa position sur son siège de sorte qu'il est le plus sujet à la fatigue et aux crampes consécutives à une mauvaise irrigation de certaines parties charnues suite à l'arrêt de la circulation sanguine dans de petits vaisseaux.

Dans une variante applicable à n'importe quelle forme d'exécution décrite précédemment, le corps de chauffe composé d'une feuille d'aluminium découpée prise entre deux feuilles de Mylar (marque déposée) peut être remplacé par un matériau textile comprenant un tissu acrylic dont les deux lisières présentent des fils de chaînes en cuivre, ces lisières étant reliées l'une à l'autre par des fils de trame en acier inoxydable jouant le rôle de résistances électriques de chauffage. Un tel tissu est vendu sous la marque commerciale IMT et est d'ailleurs déjà utilisé pour le chauffage de sièges de voitures. De préférence, ce tissu électriquement conducteur est placé entre deux feuilles de mousse de polyéthylène à pores fermés constituant la couche de matériau thermoformable. Cette mousse de polyéthylène peut être d'une densité comprise entre environ 30 et 100 kg/m3.

0143742

REVENDICATIONS

1. Siège, notamment pour voiture automobile, comprenant un châssis supportant des éléments élastiquement déformables servant au rembourrage et à la suspension, caractérisé par le fait qu'au moins une partie d'appui de ce siège comporte une couche intermédiaire d'un matériau thermoformable associée à un corps de chauffe électrique disposée en sandwich entre deux couches d'éléments élastiquement déformables et par des moyens pour maintenir les parties de ces éléments élastiquement déformables adjacentes à cette couche d'un matériau thermo-formable en contact étroit avec elle.

2. Siège selon la revendication 1, caractérisé par le fait que la couche d'éléments élastiquement déformables supportée par le châssis est constituée par de la mousse formée d'un polymère thermo-durcissable.

3. Siège selon la revendication 1, caractérisé par le fait que la couche d'éléments élastiquement déformables est constituée par une nappe de fils tendus entre deux armatures parallèles reliées au châssis par des ressorts de traction.

4. Siège selon la revendication 1, caractérisé par le fait que la couche intermédiaire en matériau thermo-formable est en une mousse de polyéthylène dont la densité est au moins égale à 30 kg/m$^3$.

5. Siège selon la revendication 1, caractérisé par le fait que les moyens pour maintenir les parties de ces éléments élastiquement déformables adjacentes à la couche d'un matériau thermo-formable en contact étroit avec elle sont constitués par un tissu de revêtement du siège fixé au châssis de ce siège.

FIG. 1

FIG. 2

Office européen
des brevets

**RAPPORT DE RECHERCHE EUROPEENNE**

0143742
Numéro de la demande

EP 84 81 0472

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 099 519 (GRANDLUND) | 1 | B 60 N 1/00 <br> A 47 C 7/02 <br> A 47 C 31/12 |
| | --- | | |
| A | US-A-3 308 491 (SPENCE) | | |
| | --- | | |
| A | US-A-4 114 214 (VON HECK) | | |
| | ----- | | |

DOMAINES TECHNIQUES
RECHERCHES (Int. Cl.4)

A 47 C 7/00
A 47 C 31/00
B 60 N 1/00

Le présent rapport de recherche a été établi pour toutes les revendications

| Lieu de la recherche <br> LA HAYE | Date d'achèvement de la recherche <br> 09-01-1985 | Examinateur <br> HORVATH R.C. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82